(19) Europäisches Patentamt
European Patent Office
Office européen des brevets

(11) EP 2 750 233 A1

(12) **EUROPEAN PATENT APPLICATION**
published in accordance with Art. 153(4) EPC

(43) Date of publication:
**02.07.2014 Bulletin 2014/27**

(21) Application number: **12826021.3**

(22) Date of filing: **22.08.2012**

(51) Int Cl.:
***H01M 8/18** (2006.01)* ***C08G 65/40** (2006.01)*
***C08G 75/23** (2006.01)* ***C08G 81/00** (2006.01)*
***H01M 8/02** (2006.01)*

(86) International application number:
**PCT/JP2012/071171**

(87) International publication number:
**WO 2013/027758 (28.02.2013 Gazette 2013/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2011 JP 2011180351**
**30.03.2012 JP 2012080266**
**17.05.2012 JP 2012113220**

(71) Applicant: **Toyobo Co., Ltd.**
**Osaka-shi**
**Osaka 530-8230 (JP)**

(72) Inventors:
- **IWAHARA, Ryouhei**
**Shiga 520-0292 (JP)**
- **YOSHIOKA, Masako**
**Shiga 520-0292 (JP)**
- **KOBAYASHI, Masaru**
**Shiga 520-0292 (JP)**
- **YAMASHITA, Masahiro**
**Shiga 520-0292 (JP)**
- **NISHIMOTO, Akira**
**Shiga 520-0292 (JP)**
- **NISHIMURA, Hirokazu**
**Shiga 520-0292 (JP)**

(74) Representative: **Vossius & Partner**
**Siebertstrasse 4**
**81675 München (DE)**

# (54) ION EXCHANGE MEMBRANE FOR VANADIUM REDOX BATTERIES, COMPOSITE BODY, AND VANADIUM REDOX BATTERY

(57) [Problem] To provide an ion exchange membrane for vanadium redox batteries having excellent chemical durability and heat resistance, and low resistance, in which vanadium ion permeation is suppressed.

[Solution] An ion exchange membrane for vanadium redox batteries characterized by containing a polymer containing a component having a sulfonic acid group as well as general formula (1),

[Chemical formula 1]

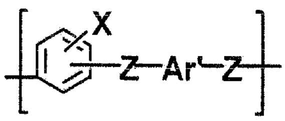

(1)

Wherein X represents a monovalent or divalent group that is a nitrile group, an amide group, an ester group, or a carboxyl group, Z represents an O atom or a S atom, and Ar' represents a divalent aromatic group.

EP 2 750 233 A1

## Description

TECHNICAL FIELD

The present invention relates to an ion exchange membrane including a polymer having a sulfonic acid group, that is particularly useful for vanadium redox batteries.

BACKGROUND ART

In recent years, new secondary batteries that are excellent in energy efficiency and environmental performance attract attention. In particular, large-size secondary batteries are eagerly demanded for storage of natural energy such as sunlight and wind power. Among others, vanadium redox batteries are suited for large-size secondary batteries because of their excellent charge-discharge cycle resistance and safety.

Vanadium redox batteries are charged or discharged by oxidation-reduction reaction of vanadiums of different valences. In a redox battery, an ion exchange membrane is used as a diaphragm for preventing vanadiums of different valences from mixing with each other while adjusting ion balance in the cathode and anode. As such an ion exchange membrane, a proton exchange membrane or an anion exchange membrane can be used.

As an anion exchange membrane, SELEMION APS (product of ASAHI GLASS CO., LTD.) is used. However, this has the problem of high resistance because an anion exchange membrane needs to be permeable to ions having a large ion radius such as sulfate anion.

Ion exchange membranes also require the capability of preventing permeation of electrolyte and the mechanical strength in addition to the ion conductivity. Examples of such ion exchange membranes include membranes including a perfluorocarbon sulfonic acid polymer into which a sulfonic acid group is introduced, as represented by Nafion (registered trade name) available from DuPont, U.S., and membranes including cross-linked polystyrenesulfonic acid as represented by NEOSEPTA available from Tokuyama Corporation.

Membranes including a perfluorocarbon sulfonic acid polymer such as Nafion have the merits of excellent chemical durability, high proton conductivity and possibility of decreasing cell resistance. However, Nafion has the problem of poor ion permeation selectivity. Concretely, since it is permeable to vanadium ions during charging or discharging, the amount of the active material in the electrolyte decreases to significantly impair the charge-discharge cycle. Also it has problems of high costs and large environmental burdens at the time of disposal.

On the other hand, membranes containing cross-linked polystyrenesulfonic acid as represented by NEOSEPTA have the merits of low costs, poor permeability to vanadium ions, and excellent ion permeation selectivity. However, it has a problem that some measure like enhancement of fibers should be taken because of insufficient strength of the membrane. Also, it has problems in terms of chemical durability and heat resistance because the sulfonic acid group is eliminated during hydrolysis or heat generation.

In light of the above, several measures for satisfying both high proton conductivity and high durability in an ion exchange membrane have been proposed. For example, in Patent Document 1 and Patent Document 2, a sulfonic acid group is introduced into an aromatic polymer to increase the mechanical strength and the heat resistance. However, most of these measures are optimized for fuel batteries, and measures that are optimized for use in redox flow batteries have been little developed.

In Non-Patent Document 1, sulfonated polyetheretherketone is used for redox flow batteries, and excellent charge-discharge characteristics thereof in comparison with Naofin is reported. However, with these measures, energy efficiency and voltage efficiency are insufficient.

CITATION LIST

PATENT DOCUMENT

PTD 1: National Patent Publication No. 11-502245
PTD 2: Japanese Patent Laying-Open No. 2004-10631

NON PATENT DOCUMENT

NPD 1: Journal of Power Sources, (China) 2011, vol. 195, p.4380-4383

SUMMARY OF INVENTION

TECHNICAL PROBLEM

In light of the above circumstances, it is an obj ect of the present invention to provide an ion exchange membrane for vanadium redox batteries exhibiting excellent energy efficiency owing to excellent chemical durability and heat resistance, low resistance and high ion selective permeability, and a vanadium redox battery using the same.

SOLUTION TO PROBLEM

As a result of diligent efforts for achieving the aforementioned object, the present inventors found that the aforementioned problems can be solved by the following measures, and accomplished the present invention.

1. An ion exchange membrane for vanadium redox batteries comprising a polymer containing a constituent of general formula (1) and a constituent having a sulfonic acid group.

[Chemical formula 1]

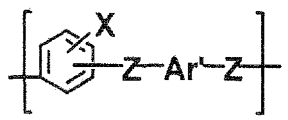

(1)

wherein X represents a monovalent or divalent group that is a nitrile group, an amide group, an ester group, or a carboxyl group, Z represents an O atom or a S atom, and Ar' represents a divalent aromatic group.

2. An ion exchange membrane for vanadium redox batteries, being an ion exchange membrane comprising a polymer having a sulfonic acid group, wherein the sulfonic acid group is a metal salt.

3. The ion exchange membrane for vanadium redox batteries according to 2., wherein the polymer having a sulfonic acid group has a constituent of general formula (1), and the metal salt is a sodium salt, potassium salt or a calcium salt.

[Chemical formula 1]

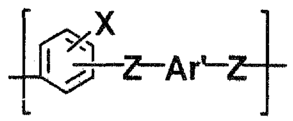

(1)

X represents a monovalent or divalent group that is a nitrile group, an amide group, an ester group, or a carboxyl group, Z represents an O atom or a S atom, and Ar' represents a divalent aromatic group.

4. An ion exchange membrane for vanadium redox batteries having a structure consisting of greater than or equal to two layers, each layer containing a polymer having a sulfonic acid group, the ion exchange membrane having greater than or equal to two layers having at least different contents of sulfonic acid group.

5. The ion exchange membrane for vanadium redox batteries according to 4., wherein the polymer having a sulfonic acid group is a hydrocarbon polymer and/or a fluorine polymer.

6. The ion exchange membrane for vanadium redox batteries according to either 4. or 5., wherein the hydrocarbon polymer having a sulfonic acid group has a constituent represented by the following general formula (1).

[Chemical formula 1]

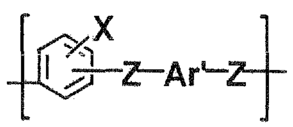

(1)

wherein X represents a monovalent or divalent group that is a nitrile group, an amide group, an ester group, or a

carboxyl group, Z represents an O atom or a S atom, and Ar' represents a divalent aromatic group.

7. The ion exchange membrane for vanadium redox batteries according to any one of 1. to 6., containing, as the constituent having a sulfonic acid group, a constituent represented by the following general formula (2).

[Chemical formula 3]

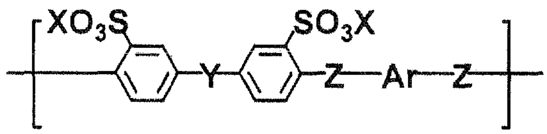

(2)

wherein Ar represents a divalent aromatic group, Y represents a sulfonyl group or ketone group, Z represents an O atom, a S atom, or a direct bond, and X represents H or a monovalent cation species.

8. The ion exchange membrane for vanadium redox batteries according to any one of 1., 3., 6., and 7., wherein the constituent of general formula (1) is a constituent represented by the following general formula (3).

[Chemical formula 4]

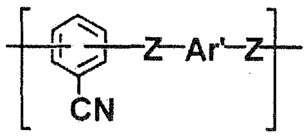

(3)

wherein Z represents an O atom or a S atom, and Ar' represents a divalent aromatic group.

9. The ion exchange membrane for vanadium redox batteries according to either 7. or 8., wherein the polymer having a sulfonic acid group contains as the constituent of the general formula (2), a constituent represented by the following general formula (4), and as the constituent of the general formula (3), a constituent represented by the following general formula (5).

[Chemical formula 5]

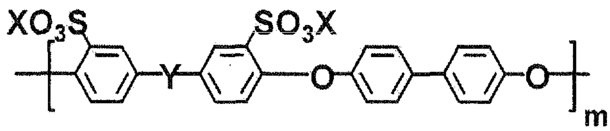

(4)

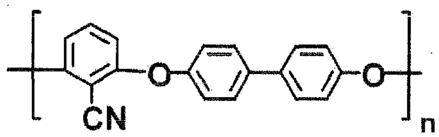

(5)

wherein m and n represent a copolymerization ratio between general formula (4) and general formula (5), and $m + n = 100$, $25 \leq m \leq 55$, $45 \leq n \leq 75$. X represents H or a monovalent cation species.

10. The ion exchange membrane for vanadium redox batteries according to any one of 4. to 6., wherein the ion exchange membrane comprises greater than or equal to two layers of ion exchange membrane that are adhered or stacked.

11. The ion exchange membrane for vanadium redox batteries according to any one of 1. to 10., wherein logarithmic viscosity of each layer in a monolayer or multilayer at 30°C of a 0.5 g/dL solution in a solvent of N-methyl-2-pyrrolidone is 0.5 to 5.0 dL/g.

12. The ion exchange membrane for vanadium redox batteries according to any one of 1. to 11., wherein the polymer having a sulfonic acid group is a polyarylene ether compound, and the ion exchange membrane contains 50 to 100% by mass of the polymer.

13. A composite body for vanadium redox batteries comprising the ion exchange membrane according to any one of 1. to 12. and an electrode.

14. A vanadium redox battery comprising the composite body according to 13.

ADVANTAGEOUS EFFECTS OF INVENTION

By the sulfonic acid group-containing aromatic polyarylene ether compound according to the present invention, it is possible to provide a material exhibiting excellent performances as an ion exchange membrane for vanadium redox batteries, including excellent heat resistance, workability and dimension stability as well as ion conductivity. The sulfonic acid group-containing aromatic polyarylene ether compound of the present invention is characterized by low vanadium ion permeability, and is useful as an ion exchange membrane for vanadium redox batteries having high energy efficiency.

BRIEF DESCRIPTION OF DRAWINGS

Fig. 1 is a schematic view of a vanadium redox flow battery.

DESCRIPTION OF EMBODIMENTS

In the following, the present invention will be described in detail. The present invention includes the first to third aspects of the present invention as will be described later, and indicates the matters common to the first to third aspects of the present invention unless otherwise noted.
The first to third aspects of the present invention provide a polymeric material that is useful as an ion exchange membrane for vanadium redox batteries, having excellent heat resistance, workability and dimension stability as well as ion conductivity. To be more specific, by using a dihalogenated compound having a polar group having polymer flocculation effect or an analogous compound thereof as well, it is possible to provide an ion exchange membrane having low vanadium ion permeability owing to the polymer flocculation effect by the polar group. Also, by synthesizing the aforementioned polyarylene ether using a 3,3'-disulfo-4,4'-dichlorophenylsulfone derivative or an analogous compound thereof as a monomer in which a sulfonic acid group is introduced on an electron-attracting aromatic ring, it is possible to provide an ion exchange membrane whose sulfonic acid group is difficult to be eliminated at high temperature.
In other words, the ion exchange membrane for vanadium redox batteries of the present invention preferably contains a polymer containing a component having a sulfonic acid group as well as general formula (1).
The second aspect of the present invention is an ion exchange membrane for vanadium redox batteries containing a polymer having a sulfonic acid group, and the sulfonic acid group is a metal salt. As described above, preferably a polymer containing a component having a sulfonic acid group which is a metal salt as well as general formula (1) is contained. More preferably, the metal salt is a sodium salt, a potassium salt, or a calcium salt. When the sulfonic acid group of the polymer constituting the membrane is a salt of sodium, potassium or calcium, the swelling property with respect to water tends to lower in comparison with the case where it is proton, and ion permeability selectivity would increase. The swelling property would differ depending on ion radius of metal of the sulfonic acid group. Comparing the cases of sodium, potassium and calcium, for example, the swelling property would be larger and the resistance would be lower in potassium having larger ion radius than in sodium or calcium, and thus excellent energy efficient would be exhibited.
The third aspect of the present invention is ion exchange membrane for vanadium redox batteries having a structure of greater than or equal to two layers, and each layer contains a polymer having a sulfonic acid group, and the ion exchange membrane has greater than or equal to two layers having at least different contents of sulfonic acid group. By employing the structure of greater than or equal to two layers for the hydrocarbon ion exchange membrane in which each layer contains different amount of sulfonic acid group, it is possible to provide an ion exchange membrane having lower vanadium ion permeability and membrane resistance. Preferably, the ion exchange membrane has a structure consisting of greater than or equal to two layers and less than or equal to five layers. With greater than or equal to five layers, the method for preparing an ion exchange membrane can be difficult. A structure having greater than or equal to two and less than or equal to three layers is more preferred.
Preferably, the polymer having a sulfonic acid group is a hydrocarbon polymer and/or fluorine polymer. As described above, preferably a polymer containing a component having a sulfonic acid group as well as general formula (1) is contained.

[Chemical formula 1]

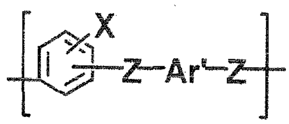

(1)

X represents a monovalent or divalent group that is a nitrile group, an amide group, an ester group, or a carboxyl group, Z represents an O atom or a S atom, and Ar' represents a divalent aromatic group.

Preferably, the component having a sulfonic acid group contains a constituent represented by the following general formula (2).

[Chemical formula 2]

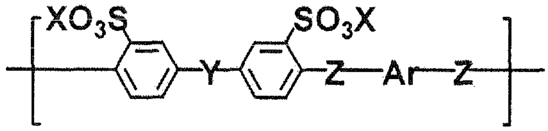

(2)

Ar represents a divalent aromatic group, Y represents a sulfonyl group or a ketone group, Z represents an O atom, a S atom, or a direct bond, and X represents H or a monovalent cation species. In the second aspect of the present invention, X represents sodium, potassium, or calcium.

Preferably, the constituent represented by the general formula (1) is the following constituent represented by the following general formula (3).

[Chemical formula 4]

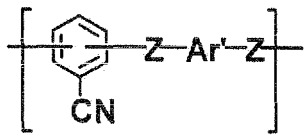

(3)

Z represents an O atom, a S atom, or a direct bond, and Ar' represents a divalent aromatic group.

The constituent represented by the general formula (2) preferably contains the constituent represented by the following general formula (4), and the constituent represented by the general formula (3) is preferably the constituent represented by the following general formula (5).

[Chemical formula 5]

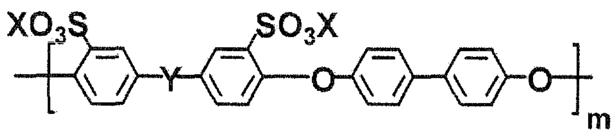

(4)

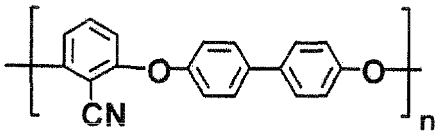

(5)

m and n represent a copolymerization ratio between general formula (4) and general formula (5), m + n = 100,25 $\leq$ m $\leq$ 55, 45 $\leq$ n $\leq$ 75, and X represents H or a monovalent cation species. In the second aspect of the present invention, X represents sodium, potassium or calcium.

As the ion exchange membrane for vanadium redox batteries of the present invention, those containing both constituents represented by the general formula (5) and the general formula (4) are particularly preferred. By having a biphenylene structure, dimension stability in an electrolyte is excellent, and the toughness of the film is high.

In the ion exchange membrane for vanadium redox batteries of the present invention, a structural unit other than the general formula (1) and the sulfonic acid group-containing component may be contained. At this time, the structural unit other than those represented by the general formula (1) is preferably less than or equal to 50% by mass of the sulfonic acid group-containing component. By containing less than or equal to 50% by mass, it is possible to take advantage of characteristics of the ion exchange membrane for vanadium redox batteries of the present invention.

As to the content of sulfonic acid group in the ion exchange membrane for vanadium redox batteries of the present invention, compositions satisfying $25 \leq m \leq 55$ and $45 \leq n < 75$ in the general formula (4) and the general formula (5) are preferred. When m is less than 25, the resultant membrane tends not to exhibit sufficient ion conductivity when it is used as a proton conductive membrane, and when m is larger than 55, swelling property with respect to an electrolyte and vanadium ion permeability tend to be too large and become unsuited for use. The content of sulfonic acid group can be determined by titration as will be described later. More preferably, $27 \leq m \leq 36$ and $64 \leq n \leq 73$.

In the third aspect of the present invention, when one layer is referred to as A, and the other layer is referred to as B in the case of a hydrocarbon ion exchange membrane having a double layer structure, a composition satisfying $30 \leq m \leq 55$ in the general formula (4) and the general formula (5) is preferred for A layer, and a composition satisfying $23 \leq m \leq 30$ is preferred for B layer. By setting m in A layer within the above range, sufficiently low resistance can be exhibited in the case of use as an ion exchange membrane for vanadium redox batteries. When m is smaller than 30, the resistance tends to be high when the membrane is used as an ion exchange membrane for vanadium redox batteries. On the other hand, by setting m in B layer within the above range, it is possible to prevent permeation of divalent vanadium ion which is the most permeable in vanadium ions. In other words, when B layer is disposed on the anode side, most excellent ion permeation suppressing effect can be expected. When m is larger than 30, the current efficiency tends to decrease because the swelling property with respect to an electrolyte and the vanadium ion permeability become too large. The content of sulfonic acid group can be determined by titration as will be described later. More preferably, A layer satisfies $35 \leq m \leq 45$, and B layer satisfies $26 \leq m \leq 30$.

In the third aspect of the present invention, when an ion exchange membrane has a structure consisting of three layers, and the upper layer is referred to as A, middle layer as B, and lower layer as C, the contents of sulfonic acid group satisfy preferably A = C > B or A = C < B, more preferably A = C > B. When A = C > B, in the general formula (4) and the general formula (5), A layer and C layer are preferably compositions that satisfy $30 \leq m \leq 55$, and B layer is preferably a composition that satisfies $23 \leq m \leq 30$. By increasing the electrolyte wettability of the surface of the ion exchange membrane by setting m for A layer and C layer within the above ranges, sufficiently low resistance can be exhibited when the ion exchange membrane is used on both surfaces as an ion exchange membrane for vanadium redox batteries. When m is smaller than 30, the resistance tends to be high when the membrane is used as an ion exchange membrane for vanadium redox batteries. On the other hand, by setting m in B layer within the above range, the middle B layer can exert vanadium ion permeation suppressing effect. When m is larger than 30, the current efficiency tends to decrease because the swelling property with respect to an electrolyte and the vanadium ion permeability become too large. The content of sulfonic acid group can be determined by titration as will be described later. More preferably, A layer satisfies $35 \leq m \leq 45$, and B layer satisfies $26 \leq m \leq 30$.

The ion exchange membrane for vanadium redox batteries of the present invention can be polymerized by aromatic nucleophilic substitution reaction involving the compounds represented by the following general formula (6) and general formula (7) as monomers. Concrete examples of the compound represented by general formula (6) include 3,3'-disulfo-4,4'-dichlorodiphenylsulfone, 3,3'-disulfo-,4,4'-difluorodiphenylsulfone, 3,3'-disulfo-4,4'-dichlorodiphenylketone, 3,3'-disulfo-4,4'-difluorodiphenylsulfone, and salts of the sulfonic acid group therein with a monovalent cation species. Non-limitative examples of the monovalent cation species include sodium, potassium and other metal species and various amines.

Examples of the compound represented by general formula (7) include 2,6-dichlorobenzonitrile, 2,6-difluorobenzonitrile, 2,4-dichlorobenzonitrile, 2,4-difluorobenzonitrile, 2,6-dichlorobenzamide, and methyl 2,6-dichlorobenzoate.

[Chemical formula 6]

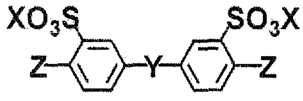

(6)

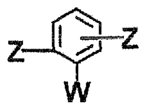

(7)

Y represents a sulfonyl group or a ketone group, X represents a monovalent cation species, Z represents chlorine or fluorine, W represents a monovalent or divalent group that is a nitrile group, an amide group, an ester group, or a carboxyl group. Among others, a nitrile compound is preferred. In the present invention, 2,6-dichlorobenzonitrile and 2,4-dichlorobenzonitrile are isomers, and good ion conductivity, heat resistance, workability and dimension stability are achieved regardless of which one of these is used. This would be because both of these monomers have excellent reactivity, and form smaller repeating units to make the structure of the entire molecule harder.

In the aforementioned aromatic nucleophilic substitution reaction, a variety of activated difluoro aromatic compounds and dichloro aromatic compounds may be used as a monomer together with the compounds represented by the general formulas (6) and (7). Non-limitative examples of these compounds include 4,4'-dichlorodiphenylsulfone, 4,4'-difluorodiphenylsulfone, 4,4'-difluorobenzophenone, 4,4'-dichlorobenzophenone, and decafluorobiphenyl, and other aromatic dihalogen compounds, aromatic dinitro compounds, aromatic dicyano compounds and the like having activity in aromatic nucleophilic substitution reaction may be used.

Ar in the constituent represented by the general formula (1) and Ar' in the constituent represented by the general formula (2) are generally structures introduced from an aromatic diol component monomer that is used together with the compounds represented by the general formulas (6) and (7) in aromatic nucleophilic substitution polymerization. Examples of the aromatic diol monomer include 4,4'-biphenol, bis(4-hydroxyphenyl)sulfone, 1,1-bis(4-hydroxyphenyl)ethane, 2,2-bis(4-hydroxyphenyl)propane, bis(4-hydroxyphenyl)methane, 2,2-bis(4-hydroxyphenyl)butane, 3,3-bis(4-hydroxyphenyl)pentane, 2,2-bis(4-hydroxy-3,5-dimethylphenyl)propane, bis(4-hydroxy-3,5-dimethylphenyl)methane, bis(4-hydroxy-2,5-dimethylphenyl)methane, bis(4-hydroxyphenyl)phenylmethane, bis(4-hydroxyphenyl)diphenylmethane, 9,9-bis(4-hydroxyphenyl)fluorene, 9,9-bis(3-methyl-4-hydroxyphenyl)fluorene, 2,2-bis(4-hydroxyphenyl)hexafluoropropane, hydroquinone, resorcin, and bis(4-hydroxyphenyl)ketone, and besides these, aromatic diols capable of being used for polymerization of polyarylene ether compound by aromatic nucleophilic substitution reaction may be used. These aromatic diols may be used singly or in combination of plural aromatic diols.

In polymerization of polymer or composition constituting the ion exchange membrane for vanadium redox batteries of the present invention by aromatic nucleophilic substitution reaction, polymer can be obtained by reacting an activated difluoro aromatic compound including compounds represented by the general formula (6) and general formula (7) and/or dichloro aromatic compounds, with aromatic diol in the presence of a basic compound. Polymerization can be caused at a temperature ranging from 0 to 350°C, but preferably caused at a temperature ranging from 50 to 250°C. At a temperature lower than 0°C, the reaction tends not to advance sufficiently, whereas at a temperature higher than 350°C, decomposition of polymer tends to start occurring. Polymerization time is preferably 8 to 16 hours. Reaction may be caused in the absence of a solvent, but is preferably caused in a solvent. Non-limitative examples of the solvent that can be used include N-methyl-2-pyrrolidone, N,N-dimethylacetamid, N,N-dimethylformamide, dimethylsulfoxide, diphenylsulfone, and sulfolane, and any other solvents that are stable in aromatic nucleophilic substitution reaction can be used. These organic solvents may be used singly or as a mixture of greater than or equal to two kinds. Non-limitative examples of the basic compound include sodium hydroxide, potassium hydroxide, sodium carbonate, potassium carbonate, sodium hydrogen carbonate, and potassium hydrogen carbonate, and any other basic compounds may be used as far as they can make aromatic diols into an activated phenoxide structure. In aromatic nucleophilic substitution reaction, water can be generated as a byproduct. In this case, water can be removed outside the system by making toluene or the like coexist in the reaction system regardless of the polymerization solvent. As a method for removing water outside the system, a water absorbing material such as molecular sieves can also be used. When the aromatic nucleophilic substitution reaction is caused in a solvent, it is preferred to load the monomer so that the obtained polymer concentration is 5 to 50% by mass. At a concentration of less than 5% by mass, the degree of polymerization tends to be difficult to increase. On the other hand, at a concentration of larger than 50% by mass, the viscosity of the reaction system tends to be too high and a post treatment of the reactant tends to be difficult. After end of polymerization reaction, the solvent is removed from the reaction solution by evaporation, and the residue is washed as necessary to obtain an intended polymer. By adding the reaction solution to the solvent in which polymer solubility is low, the polymer is deposited

as a solid, and the polymer can be obtained by collecting the deposit by filtration.

The polymer or composition constituting the ion exchange membrane for vanadium redox batteries of the present invention may be a block polymer composed of the constituents of the general formula (1) and the general formula (2). Employing a block polymer is preferred because dimension stability in an electrolyte is excellent, and vanadium ion permeation suppressing effect is increased owing to micro phase separating structure of the hydrophilic segment and the hydrophobic segment.

The block polymer composed of the constituents of the general formula (1) and the general formula (2) can be synthesized by any known methods. The block polymer can be synthesized by coupling preliminarily synthesized oligomers that are to become the hydrophilic segment of the general formula (1) and the hydrophobic segment of the general formula (2) with a coupling agent. As an example, a method of binding oligomers having a hydroxyl group end by a perfluoro aromatic compound such as decafluorobiphenyl can be recited. In this case, the molar ratio between the perfluoro aromatic compound such as decafluorobiphenyl and both oligomers is preferably near 1.

Synthesis can also be achieved by modifying a terminal end group of either one of the oligomers which are to become the hydrophilic and the hydrophobic segments that are preliminarily synthesized with a highly reactive group of a perfluoro aromatic compound such as decafluorobiphenyl, and reacting the other of the oligomers. In the above reaction, the oligomer may be used after being purified and isolated following synthesis, or the oligomer may be used in a solution in which it is synthesized, or a purified and isolated oligomer may be used as a solution. The oligomer to be purified and isolated may be either of oligomers, but the oligomer that is to form the hydrophobic segment is easy to be synthesized. In the method of modifying a terminal end group of either one of the oligomers which are to become the hydrophilic and the hydrophobic segments that are preliminarily synthesized with a highly reactive group, and reacting the other of the oligomers, it is preferred to react equivalent moles of the modified oligomer and the other oligomer, however, it is preferred to make the modified oligomer slightly excessive for preventing gelation by side reaction during the reaction. The degree of excess is preferably in the range of 0.1 to 50% by mol, and more preferably in the range of 0.5 to 10% by mol although it differs depending on the molecular weight of the oligomer and the molecular weight of intended polymer. As the segment for which terminal end is modified with a highly reactive group, the hydrophobic segment is more preferred. The modification reaction can fail to proceed successively depending on the structure of the hydrophilic segment.

The polymer or composition constituting the ion exchange membrane for vanadium redox batteries preferably exhibits a polymer logarithmic viscosity measured by the method as will be describe later, of greater than or equal to 0.5 dl/g in a mono layer or in each layer of plural layers. When the logarithmic viscosity is smaller than 0.5 dl/g, the membrane tends to be brittle when it is formed into an ion exchange membrane. The logarithmic viscosity is more preferably greater than or equal to 0.8 dl/g. On the other hand, a logarithmic viscosity exceeding 5 is not preferred because a problem of workability such as difficulty in dissolution of polymer arises. As a solvent for measuring logarithmic viscosity, polar organic solvents such as N-methylpyrrolidone, and N,N-dimethylacetamide can be generally used, and when the solubility to these solvents is low, measurement may be conducted using concentrated sulfuric acid.

The polymer or composition constituting the ion exchange membrane for vanadium redox batteries of the present invention may be a monolithic polymer, or a composition by combination with other polymer. Non-limitative examples of these polymers include polyesters such as polyethylene terephthalate, polybutylene terephthalate, and polyethylene naphthalate, polyamides such as nylon 6, nylon 6,6, nylon 6,10, and nylon 12, polymethylmethacrylate, polymethacrylic acid esters, acrylate resins such as polymethylacrylate, polyacrylic acid esters, polyacrylic acid resin, polymethacrylic acid resin, polyolefines including polyethylene, polypropylene, polystyrene and diene polymer, polyurethane resin, cellulose resins such as cellulose acetate and ethyl cellulose, aromatic polymers such as polyarylate, aramid, polycarbonate, polyphenylenesulfide, polyphenyleneoxide, polysulfone, polyethersulfone, polyetheretherketone, polyetherimide, polyimide, polyamideimide, polybenzimidazole, polybenzoxazole, and polybenzthiazole, thermo setting resins such as epoxy resin, phenol resin, novolac resin, and benzoxadine resin. The composition with a basic polymer such as polybenzimidazole or polyvinylpyridine is preferred combination for improvement of polymer dimension stability. Introduction of a sulfonic acid group into these basic polymers will result in more preferred workability of the composition. In these compositions, it is preferred that the sulfonic acid group-containing polyarylene ether compound of the present invention is contained in greater than or equal to 50% by mass and less than 100% by mass in the entire composition. More preferably, it is greater than or equal to 70% by mass and less than 100% by mass. When the content of the sulfonic acid group-containing polyarylene ether compound of the present invention is less than 50% of the entire composition, the concentration of sulfonic acid group of the ion exchange membrane containing the composition is low and good ion conductivity tends not to be obtained, and units containing a sulfonic acid group are noncontinuous phases and mobility of conducting ion tends to decrease. The composition of the present invention may contain various additives such as an antioxidant, a thermal stabilizer, a lubricant, a tackifier, a plasticizer, a cross-linking agent, a viscosity modifier, an antistatic agent, an antibacterial agent, an antifoam agent, a dispersant, and a polymerization inhibitor as needed.

The ion exchange membrane according to the third aspect of the present invention may contain various enhancing layers such as glass paper, glass cloth, ceramic nonwoven fabric, porous base materials, and nonwoven fabric as needed.

The polymer or composition constituting the ion exchange membrane for vanadium redox batteries of the present invention can be formed into a body in the shape of fiber or film by any known methods including extrusion, spinning, rolling and casting. Among these, it is preferred to form from a solution in an appropriate solvent. Non-limitative examples of the solvent include aprotic polar solvents such as N,N-dimethylformamide, N,N-dimethylacetamide, dimethylsulfoxide, N-methyl-2-pyrrolidone, and hexamethylphosphoneamide, and alcohols such as methanol and ethanol, and an appropriate one can be selected from these examples. These solvents may be used in a mixture of plural kinds within a possible range. Compound concentration in the solution is preferably within a range of 0.1 to 50% by mass. At a compound concentration in the solution of less than 0.1% by mass, it tends to be difficult to obtain a good formed body, whereas at a compound concentration exceeding 50% by mass, the workability tends to be impaired. A formed body can be obtained by a conventionally well known method. For example, by heating, drying under reduced pressure, or dipping in a compound non-solvent prepared by mixing with a solvent dissolving the compound, it is possible to remove the solvent and obtain a formed body. When the solvent is an organic solvent, it is preferred to distil off the solvent by heating or drying under reduced pressure. In this case, it can be formed into various shapes including fiber, film, pellet, plate, rod, pipe, ball, and block in which it is composited with other compound as needed. Combining with a compound exhibiting similar dissolution behavior is preferred because satisfactory formation is achieved. The sulfonic acid group in the formed body obtained in this manner may include a salt with cation species, but it can be converted into a free sulfonic acid group by an acid treatment as needed.

While the method for laminating the ion exchange membrane in the third aspect of the present invention is not particularly limited, it is preferred to laminate by adhesion or stacking. Stacking means laminating plural ion exchange membranes without use of an adhesive or the like. Adhesion means bonding plural ion exchange membranes with an adhesive ion exchange resin or the like, or conducting multi-layer solution casting. In the case of stacking, plural ion exchange membranes may be stacked while water or an organic solvent is contained in the surface. In the case of adhesion, recoating of cast solution, multi-layer solution casting, heating press and the like, any known methods can be employed.

The most preferred measure for forming an ion exchange membrane of each layer is casting from a solution, and an ion exchange membrane for vanadium redox batteries can be obtained by removing the solvent from the casted solution. A hydrocarbon ion exchange membrane having a structure of greater than or equal to two layers can be obtained by stacking or adhering these membranes.

From the sulfonic acid group-containing polyarylene ether compound or the composition thereof, an ion exchange membrane of the present invention is prepared. The most preferred measure for forming an ion exchange membrane is casting from a solution, and by removing the solvent as described above from the casted solution, an ion exchange membrane for vanadium redox batteries can be obtained. As the solution, solvents using organic polar solvents such as N-methyl-2-pyrrolidone, N,N-dimethylformamide and dimethylsulfoxide, and occasionally alcohol solvents and the like can be used. The solvent is removed preferably by drying from the view point of uniformity of the ion exchange membrane for vanadium redox batteries. For preventing deterioration of the compound or solvent, drying can be conducted at a low temperature as possible under reduced pressure. When the viscosity of the solution is high, casting at high temperature by heating the substrate or the solution facilitates the casting as a result of decrease in viscosity of the solution. The thickness of the solution in casting is not particularly limited, and is preferably 10 to 1000 μm. More preferably, it is 50 to 500 μm. When the thickness of the solution is smaller than 10 μm, the form as the ion exchange membrane for vanadium redox batteries tends not to be kept, and when the thickness is larger than 1000 μm, a nonuniform ion exchange membrane tends to be formed. For controlling the casting thickness of the solution, a known method can be used. For example, the thickness can be controlled by the amount or concentration of the solution by uniformizing the thickness using an applicator, a doctor blade or the like, or uniformizing the casting area using a glass petri dish or the like. As to the casted solution, a more uniform membrane can be obtained by adjusting the removing speed of the solvent. For example, in the case of heating, the evaporation speed can be reduced by employing low temperature in an initial stage. In the case of dipping in a non-solvent such as water, the solidification speed of the compound can be adjusted, for example, by leaving the solution still in air or inert gas for an appropriate time. The ion exchange membrane for vanadium redox batteries of the present invention may have any membrane thickness depending on the purpose, and is preferably as thin as possible in the aspect of ion conductivity. Concretely, in the first and second aspects of the present invention, it is preferably 5 to 200 μm, more preferably 5 to 50 μm, and most preferably 5 to 20 μm. In the third aspect of the present invention, thickness of each layer is preferably 5 to 200 μm, more preferably 5 to 50 μm, and most preferably 5 to 20 μm. When the thickness of the ion exchange membrane for vanadium redox batteries is smaller than 5 μm, it is difficult to handle the ion exchange membrane, and shunt or the like tends to occur when a vanadium redox battery is prepared using the same, whereas when the thickness is larger than 200 μm, electrical resistance of the ion exchange membrane increases, and power generation performance of the vanadium redox battery tends to decrease. In the case of using as an ion exchange membrane for vanadium redox batteries, the sulfonic acid group in the membrane may include a metal salt, but it may be converted into free sulfonic acid by an appropriate acid treatment. In this case, it is also effective to conduct by dipping the membrane in an aqueous solution of sulfuric acid, hydrochloric acid or the

like under heating or without heating. Ion conductivity of the ion exchange membrane is preferably greater than or equal to $1.0 \times 10^{-3}$ S/cm. When the ion conductivity is greater than or equal to $1.0 \times 10^{-3}$ S/cm, satisfactory output tends to be obtained in a vanadium redox battery using the ion exchange membrane, and when the ion conductivity is less than $1.0 \times 10^{-3}$ S/cm, decrease in output of the vanadium redox battery tends to occur.

IEC (ion exchange capacity) of the ion exchange membrane according to the first and second aspects of the present invention is preferably greater than or equal to 0.5 meq/g, and preferably less than or equal to 3.0 meq/g. Further, IEC of the ion exchange membrane is more preferably greater than or equal to 1.3 meq/g, and less than or equal to 2.1 meq/g. When IEC of the ion exchange membrane is less than or equal to 0.5 meq/g, sufficient proton conductivity tends not to be exhibited when it is used as a proton conductive membrane. When IEC of the ion exchange membrane is less than or equal to 3.0 meq/g, it tends not to be suitable for use because the swelling property with respect to an electrolyte and the vanadium ion permeability become too large. In the third aspect of the present invention, greater than or equal to two layers having different sulfonic acid group contents need to be provided. Preferably, IEC of sulfonic acid group of each layer is greater than or equal to 0.5 meq/g and less than or equal to 3.0 meq/g. More preferably, IEC of each layer is greater than or equal to 1.3 meq/g and less than or equal to 2.1 meq/g. When IEC of the ion exchange membrane is 0.5 meq/g, sufficient proton conductivity tends not to be exhibited as it is used as a hydrocarbon ion exchange membrane composed of greater than or equal to two layers. When IEC of the ion exchange membrane is more than or equal to 3.0 meq/g, it tends not to be suitable for use because the swelling property with respect to an electrolyte and the vanadium ion permeability become too large. Difference in ion exchange capacity between the layers having different ion exchange capacities is preferably greater than or equal to 0.5 meq/g and less than or equal to 1.5 meq/g, and more preferably greater than or equal to 0.8 meq/g and less than or equal to 1.3 meq/g.

The 3% weight reduction temperature of the ion exchange membrane of the present invention is preferably 300°C to 500°C. When it is less than or equal to 300°C, durability in use at elevated temperature can be insufficient.

A vanadium redox battery is a battery that is charged or discharged by oxidation-reduction reaction of vanadiums of different valences. The ion exchange membrane modulates the ion balance in the cathode and anode, while serving as a diaphragm for preventing vanadiums of different valences from mixing with each other. The ion exchange membrane for vanadium redox batteries of the present invention may be used as a redox flow battery that is charged or discharged by circulation of an aqueous solution electrolyte with a pump, or may be used as a redox battery in which a carbon electrode is immersed with vanadium hydrate in place of an aqueous solution electrolyte. The redox flow battery that is charged or discharged by circulation of an aqueous solution electrolyte with a pump has an electrolytic cell having such a structure that a diaphragm is disposed between a pair of current collecting plates that are arranged oppositely leaving a space therebetween, and an electrode material is pressure-contacted and sandwiched between at least one of the current collecting plates and the diaphragm, and the electrode material is composed of an aqueous solution containing an active substance.

As an aqueous solution electrolyte, those of iron-chromium base, titanium-manganese-chromium base, chromium-chromium base, and iron-titanium base can be recited besides the vanadium-based electrolyte as described above, but a vanadium-based electrolyte is preferred. The carbon electrode material assembly of the present invention is especially useful for use in a redox flow battery that uses a vanadium-based electrolyte having a viscosity of greater than or equal to 0.005 Pa•s at 25°C, or in a vanadium-based electrolyte containing greater than or equal to 1.5 mol/l vanadium ions.

## EXAMPLES

In the following, examples of the present invention will be concretely described, however, the present invention will not be limited to these examples. Each measurement was conducted in the following manner.

Viscosity of solution: polymer powder was dissolved at a concentration of 0.5 g/dl in N-methylpyrrolidone, and viscosity was measured in a thermostat bath at 30°C by using a Ubbelohde viscometer, and evaluated by logarithmic viscosity ln[ta/tb]/c (ta represents the number of seconds for drop of a sample solution, tb represents the number of seconds for drop of a solvent alone, and c represents polymer concentration).

TGA: Using a thermogravimetric analyzer (TGA-50) available from Shimadzu Corporation, measurement was conducted in an argon atmosphere at a temperature elevation speed of 10°C/min (in mid course, water is sufficiently removed by retention at 150°C for 30 minutes). The 3% weight reduction temperature is determined as a temperature at which the weight is reduced by 3% weight relative to the weight after temperature elevation to 200°C.

Battery characteristics: a small cell having an electrode area of 10 $cm^2$ (10 cm in the vertical direction (liquid flow direction) and 1 cm in the width direction) was prepared, and charging and discharging at a constant current density were repeated, and current efficiency, cell resistance, energy efficiency and voltage efficiency were calculated in the following manners. As a cathode electrolyte, an aqueous solution of 2 mol/l vanadium oxysulfate in 3 mol/l sulfuric acid was used, and as an anode electrolyte, an aqueous solution of 2 mol/l vanadium sulfate in 3 mol/l sulfuric acid was used. The amount of electrolyte was large excess for the piping. The liquid flow rate was 6.2 ml/min., and measurement was

conducted at 30°C.

(a) Current efficiency: $\eta_I$

In one cycle of the test that starts from charging and ends with discharging, letting the electric quantity required for charging to 1.7 V be $Q_1$ coulombs, and the electric quantities that are taken out by constant current discharging to 1.0 V and by the subsequent constant voltage discharging at 1.2 V respectively be $Q_2$ and $Q_3$ coulombs when current density is 40 mA/cm$^2$ (400mA) per electrode geometric area, current efficiency $\eta_I$ is determined by numerical expression 1.

[Numerical expression 1]

$$\eta_I = \frac{Q_2 + Q_3}{Q_1} \times 100 \quad (\%)$$

(b) Cell resistance: R

Referring the rate of electric quantity taken out by discharging to theoretical electric quantity $Q_{th}$ required for completely reducing $V^{3+}$ in the anode liquid to $V^{2+}$ as a charge percentage, the charge percentage is determined by numerical expression 2.

[Numerical expression 2]

$$\text{(Charge percentage)} = \frac{Q_2 + Q_3}{Q_{th}} \times 100 \quad (\%)$$

Charge voltage $V_{C50}$ and discharge voltage $V_{D50}$ corresponding to the electric quantity at a charge percentage of 50% are determined from an electric quantity - voltage curve, and cell resistance R ($\Omega \cdot cm^2$) to the electrode geometric area is determined by numerical expression 3.

[Numerical expression 3]

$$R = \frac{V_{C50} - V_{D50}}{2 \cdot I} \times 10 \quad (\Omega \cdot cm^2)$$

(c) Voltage efficiency: $\eta_V$

Using cell resistance R determined by the above method, voltage efficiency $\eta_V$ is determined by a simple method of numerical expression 4.

[Numerical expression 4]

$$\eta_V = \frac{E - I \cdot R / 10}{E + I \cdot R / 10} \times 100 \quad (\%)$$

Here, E represents a cell open circuit voltage of 1.432 V (actual measurement) at a charge percentage of 50%, and I represents current value of 0.4 A in constant current charging and discharging.

(d) Energy efficiency: $\eta_E$

Energy efficiency $\eta_E$ is determined by numerical expression 5 using the aforementioned current efficiency $\eta_I$

and voltage efficiency $\eta_V$.

[Numerical expression 5]

$$\eta_E = \eta_I \times \eta_V \times \frac{1}{100} \quad (\%)$$

(e) Time-dependent change of charge-discharge cycle

After measurements of (a), (b), (c), and (d), charging and discharging are repeatedly carried out at a cell voltage of 1.0 to 1.7 V at a constant current density of 40 mA/cm$^2$ using the same cell. After a lapse of a specified cycle, measurements of (a), (b), (c), and (d) were conducted again, and $\eta_E$ and a variation $\Delta\eta_E$ from the initial stage are determined.

NMR measurement: Polymer (sulfonic acid group is Na or K salt) was dissolved in a solvent, and $^1$H-NMR was conducted at room temperature using UNITY-500 available from VARIAN. As the solvent, deuterated dimethylsulfoxide was used. From the peak area value coming from structural formula (4) and the peak area value coming from structural formula (5), a mol ratio of constituents was calculated, and values of m and n were calculated.

IEC: 100 mg of dried ion exchange membrane was dipped in 50 ml of 0.01 N NaOH aqueous solution, and stirred overnight at 25°C. Then neutralization titration was conducted with 0.05 N HCl aqueous solution. For neutralization titration, potentiometric titrator COMTITE-980 available from Hiranuma Sangyo Corporation was used. Ion exchange equivalent was determined by calculation according to the following expression.

$$\text{Ion exchange capacity [meq/g]} = (10 - \text{titer [ml]})/2$$

(Example 1)

In a 100 ml tetra-necked flask, 5.000g (0.01012 moles) of 3,3'-disulfo-4,4'-dichlorodiphenylsulfone disodium salt (abbreviation: S-DCDPS), 2.2215g (0.01288 moles) of 2,6-dichlorobenzonitrile(abbreviation: DCBN), 4.2846g (0.02299 moles) of 4,4'-biphenol, 3.4957g (0.02529 moles) of potassium carbonate, and 2.61 g of molecular sieves were weighed and charged, and nitrogen was caused to flow. After adding 30 ml af NMP, the reaction was stirred at 150°C for an hour, and then the reaction temperature was raised to 195 to 200°C and the reaction was continued roughly until the viscosity of the system sufficiently increased (about 5 hours). After allowing the reaction to cool, the settled out molecular sieves were removed, and caused to deposit in a strand shape in water. The obtained polymer was washed in boiling water for one hour, and then dried. The polymer showed a logarithmic viscosity of 1.24 dl/g, and m = 44, and n = 56 in the above structural formula. The structural formula of the polymer is shown below. The following is called polymer 1.

[Chemical formula 7]

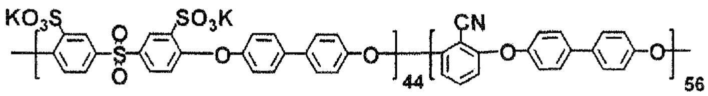

Regarding polymer 1, 1 g was dissolved in 5 ml of NMP, and the solution was casted in a thickness of about 200 μm on a glass plate on a hot plate, and NMP was distilled off until the polymer became a film-like shape, followed by dipping in water overnight or longer. The obtained film was treated with boiling water for an hour in diluted sulfuric acid (concentrated sulfuric acid 6 ml, water 300 ml) to remove the salt, and then boiled in pure water for another one hour to remove an acid component. The 3% weight reduction temperature (determined based on the sample weight at 200°C) by thermogravimetric determination of the film was 389°C. IEC determined by titration was 2.03 meq/g.

(Example 2)

Polymerization was conducted in a similar manner to Example 1 except that 4.4560 g (0.00902 moles) of 3,3-disulfo-4,4'-dichlorodiphenylsulfone disodium salt (abbreviation: S-DCDPS), 3.1583 g (0.01831 mole) of 2,6-dichlorobenzonitrile (abbreviation: DCBN), 5.0912 g (0.02732 moles) of 4,4'-biphenol, and 4.1538 g (0.03005 moles) of potassium carbonate were used, to obtain a polymer satisfying m = 33, n = 67 in the above structural formula. The polymer showed a logarithmic viscosity of 1.58 dl/g. The structural formula of the polymer is shown below. The following is called polymer 2.

[Chemical formula 8]

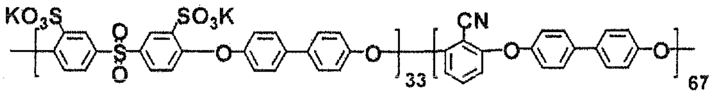

A solution of polymer 2 in NMP was casted on a glass plate on a hot plate in a controlled thickness, and NMP was distilled off until the polymer became a film-like shape, followed by dipping in water overnight or longer, to obtain a film having a mean thickness of 30 μm. The obtained film was treated in diluted sulfuric acid (concentrated sulfuric acid 6 ml, water 300 ml) for one hour to remove the salt, and then dipped in pure water for another one hour to remove an acid component. The 3% weight reduction temperature (determined based on the sample weight at 200°C) by thermogravimetric determination of the film was 384°C. IEC determined by titration was 1.70 meq/g.

(Example 3)

A solution of polymer 2 in NMP was casted on a glass plate on a hot plate in a controlled thickness, and NMP was distilled off until the polymer became a film-like shape, followed by dipping in water overnight or longer, to obtain a film having a mean thickness of 30 μm.

(Example 4)

Polymerization was conducted in a similar manner to Example 1 except that 4.3220g (0.00875 moles) of 3,3'-disulfo-4,4'-dichlorodiphenylsulfone disodium salt (abbreviation: S-DCDPS), 4.1847g (0.02426 moles) of 2,6-dichlorobenzonitrile (abbreviation: DCBN), 6.1494g (0.03300 moles) of 4,4'-biphenol, and 5.0171g (0.03630 moles) of potassium carbonate were used, to obtain a polymer satisfying m = 26.5, n = 73.5 in the above structural formula. The polymer showed a logarithmic viscosity of 1.58 dl/g. The structural formula of the polymer is shown below. The following is called polymer 3.

[Chemical formula 9]

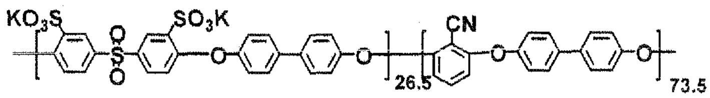

For each of polymer 1 and polymer 3,1 g was dissolved in 5 ml of NMP, and the solution was casted in a thickness of about 200 μm on a glass plate on a hot plate, and NMP was distilled off until the polymer became a film-like shape, followed by dipping in water overnight or longer. The obtained film was subjected to a boiling water treatment for one hour in diluted sulfuric acid (concentrated sulfuric acid 6 ml, water 300 ml) to remove the salt and to convert it into acid, and then dipped in pure water for another one hour to remove an acid component, and then dried. Thickness of each membrane was 30 μm. The 3% weight reduction temperature (determined based on the sample weight at 200°C) by thermogravimetric determination of the film was 389°C. IEC determined by titration was 2.03 meq/g and 1.33 meq/g, respectively.

The prepared ion exchange membranes of polymers 1 and 3 were stacked, and sandwiched between a carbon electrode material (XF30A available from TOYOBO CO., LTD.) to assemble a cell as shown in Fig. 1. A small cell having an electrode area of 10 $cm^2$ (10 cm in the vertical direction (liquid flow direction) and 1 cm in the width direction) was prepared, and charging and discharging at constant current density were repeated, and performances of ion exchange membrane were evaluated. As a cathode electrolyte, an aqueous solution of 2 mol/l of vanadium oxysulfate in 3 mol/l of sulfuric acid was used, and as an anode electrolyte, an aqueous solution of 2 mol/l of vanadium sulfate in 3 mol/l of sulfuric acid was used. The amount of electrolyte was large excess for the cell or the piping. The liquid flow rate was 6.2 ml/min., and measurement was conducted at 30°C.

(Example 5)

For each of polymer 3 and polymer 2, 1 g was dissolved in 5 ml of NMP, and the solution of polymer 3 was casted in a thickness of about 80 μm on a glass plate on a hot plate, and NMP was distilled off until the polymer became a film-like shape, followed by dipping in water overnight or longer. Then the solution of polymer 2 was casted thereon

in a thickness of about 200 μm, and NMP was distilled off until the polymer became a film-like shape, followed by dipping in water overnight or longer. Each of the obtained films was subjected to a boiling water treatment for one hour in diluted sulfuric acid (concentrated sulfuric acid 6 ml, water 300 ml) to remove the salt and to convert it into acid, and then boiled in pure water for another one hour to remove the released acid component, and then dried. Membrane thickness of polymer 3 was 10 μm, and membrane thickness of polymer 2 was 30 μm. The 3% weight reduction temperature (determined based on the sample weight at 200°C) by thermogravimetric determination of the film was 389°C. IEC determined by titration was 1.33 meq/g, and 1.71 meq/g, respectively. Performances of ion exchange membrane were evaluated in a similar manner to Example 4 except that the prepared ion exchange membranes of polymers 3 and 2 were stacked, and sandwiched between carbon electrode materials (XF30A available from TOYOBO CO., LTD.).

(Example 6)

For each of polymer 1 and polymer 3, 1 g was dissolved in 5 ml of NMP, and first the NMP solution of polymer 1 was casted in a thickness of about 200 μm on a glass plate on a hot plate, and NMP was distilled off until the polymer became a film-like shape. Further the NMP solution of polymer 2 was casted in a thickness of 200 μm thereon, and NMP was distilled off until the polymer became a film-like shape. Further NMP solution of polymer 1 was casted in a thickness of 200 μm thereon, and NMP was distilled off until the polymer became a film-like shape, and then the film was dipped in water overnight or longer, and then dried. The obtained ion exchange membrane having three layers was assembled into a cell in the same manner as described above, and performances were evaluated. Thickness of each layer was 10 μm.

Each of the ion exchange membranes prepared in Examples 1 to 6 was sandwiched between carbon electrode materials (XF30A available from TOYOBO CO., LTD.) to assemble a cell as shown in Fig. 1. A small cell having an electrode area of 10 $cm^2$ (10 cm in the vertical direction (liquid flow direction) and 1 cm in the width direction) was prepared, and charging and discharging at constant current density were repeated, and performances of ion exchange membrane were evaluated. As a cathode electrolyte; an aqueous solution of 2 mol/l of vanadium oxysulfate in 3 mol/l of sulfuric acid was used, and as an anode electrolyte, an aqueous solution of 2 mol/l of vanadium sulfate in 3 mol/l of sulfuric acid was used. The amount of electrolyte was large excess for the cell or the piping. The liquid flow rate was 6.2 ml/min., and measurement was conducted at 30°C.

Using ion exchange membranes prepared in Examples 1 to 6 and ion exchange membranes of Comparative Examples 1 and 2, two to four cycles of charging and discharging were conducted. As Comparative Examples, similar measurements were conducted using Nafion 115CS available from DuPont (U.S.) (Comparative example 2) and Selemion DMV available from ASAHI GLASS CO., LTD. (Comparative Example 1). The results are shown in Table 1.

[Table1]

| Membrane | Current density ($mA/cm^2$) | Temperature (°C) | Cycle No. | Current efficiency ηI(%) | Current efficiency ηV(%) | Energy efficiency ηE(%) | Depth of charge DOC (%) | Cell resistance ($\Omega \cdot cm^2$) |
|---|---|---|---|---|---|---|---|---|
| Example 1 | 62.5 | 30 | 2 | 92.03 | 93.69 | 86.22 | 89.90 | 0.728 |
| Example 2 | 62.5 | 30 | 2 | 97.92 | 92.18 | 90.27 | 94.91 | 0.904 |
| Example 3 | 62.5 | 30 | 2 | 98.54 | 91.98 | 90.64 | 98.00 | 0.928 |
| Example 4 | 62.5 | 30 | 2 | 97.63 | 90.16 | 88.03 | 91.18 | 1.152 |
| Example 5 | 62.5 | 30 | 2 | 99.21 | 90.37 | 89.65 | 93.55 | 1.123 |
| Example 6 | 62.5 | 30 | 2 | 99.28 | 90.10 | 89.45 | 93.44 | 1.160 |
| Comparative Example 1 (Selemion DMV) | 62.5 | 30 | 2 | 99.33 | 82.55 | 82.00 | 94.30 | 2.080 |
| | | | 4 | 99.42 | 83.58 | 83.10 | 87.72 | 1.960 |
| Comparative Example 2 (Nafion 115CS) | 62.5 | 30 | 2 | 87.81 | 91.48 | 80.32 | 83.57 | 0.984 |
| | | | 4 | 89.19 | 91.60 | 81.70 | 75.82 | 0.968 |

As is apparent from the results of Table 1, the ion exchange membrane of Example 1 showed the lowest cell resistance and excellent voltage efficiency. Also the ion exchange membrane of Example 2 showed low cell resistance, and excellent voltage efficiency and energy efficiency. The ion exchange membrane of Example 3 showed the most excellent energy efficiency in monolayer membranes. The ion exchange membranes of Examples 3 to 5 consisting of greater than or equal to two layers showed very high current efficiency, while showing low resistance and excellent energy efficiency. From these results, it is supposed that aged deterioration of energy efficiency during charge-discharge cycle in long-term use can be inhibited.

On the other hand, although the current efficiency was excellent in Comparative Example 1, the voltage efficiency decreased because the cell resistance was high. In Comparative Example 2, the current efficiency decreased because permeation suppression of vanadium ion was insufficient although the cell resistance was low as is the case with Example 1.

INDUSTRIAL APPLICABILITY

By using the sulfonic acid group-containing aromatic polyarylene ether compound of the present invention as an ion exchange membrane for redox battery, it is possible to provide a redox battery exhibiting long service life, low cell resistance, excellent voltage efficiency and energy efficiency.

REFERENCE SIGNS LIST

1 ... current collecting plate, 2... spacer, 3... ion exchange membrane, 4a,b... liquid communication path, 5... electrode material, 6 ... cathode liquid tank, 7...anode liquid tank, 8,9...pump

## Claims

1. An ion exchange membrane for vanadium redox batteries comprising a polymer containing a constituent of general formula (1) and a constituent having a sulfonic acid group.

[Chemical formula 1]

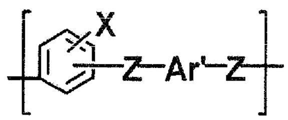

(1)

(wherein X represents a monovalent or divalent group that is a nitrile group, an amide group, an ester group, or a carboxyl group, Z represents an O atom or a S atom, and Ar' represents a divalent aromatic group.)

2. An ion exchange membrane for vanadium redox batteries comprising a polymer having a sulfonic acid group, wherein the sulfonic acid group is a metal salt.

3. The ion exchange membrane for vanadium redox batteries according to claim 2, wherein the polymer having a sulfonic acid group has a constituent of general formula (1), and the metal salt is a sodium salt, a potassium salt or a calcium salt.

[Chemical formula 1]

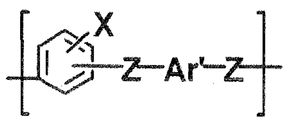

(1)

(wherein X represents a monovalent or divalent group that is a nitrile group, an amide group, an ester group, or a carboxyl group, Z represents an O atom or a S atom, and Ar' represents a divalent aromatic group.)

4. An ion exchange membrane for vanadium redox batteries having a structure consisting of less than or equal to two layers, each layer containing a polymer having a sulfonic acid group, the ion exchange membrane having at least two layers having different contents of sulfonic acid group.

5. The ion exchange membrane for vanadium redox batteries according to claim 4, wherein the polymer having a sulfonic acid group is a hydrocarbon polymer and/or a fluorine polymer.

6. The ion exchange membrane for vanadium redox batteries according to claim 4 or 5, wherein the hydrocarbon polymer having a sulfonic acid group has a constituent represented by the following general formula (1).

[Chemical formula 1]

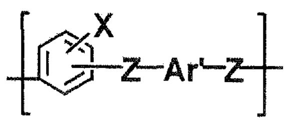

(1)

(wherein X represents a monovalent or divalent group that is a nitrile group, an amide group, an ester group, or a carboxyl group, Z represents an O atom or a S atom, and Ar' represents a divalent aromatic group.)

7. The ion exchange membrane for vanadium redox batteries according to any one of claims 1 to 6, containing a constituent represented by the following general formula (2), as the constituent having a sulfonic acid group.

[Chemical formula 3]

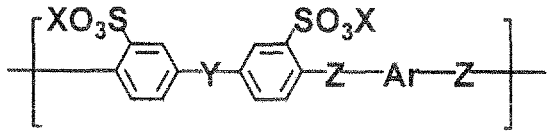

(2)

(wherein Ar represents a divalent aromatic group, Y represents a sulfonyl group or a ketone group, Z represents an O atom, a S atom, or a direct bond, and X represents H or a monovalent cation species.)

8. The ion exchange membrane for vanadium redox batteries according to any one of claims 1, 3, 6 and 7, wherein the constituent represented by general formula (1) is a constituent represented by the following general formula (3).

[Chemical formula 4]

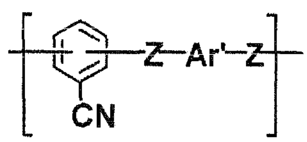

(3)

(wherein, Z represents an O atom or a S atom, and Ar' represents a divalent aromatic group.)

9. The ion exchange membrane for vanadium redox batteries according to claim 7 or 8, wherein the polymer having a sulfonic acid group contains a constituent represented by the following general formula (4) as the constituent of the general formula (2), and contains a constituent represented by the following general formula (5) as the constituent of the general formula (3).

[Chemical formula 5]

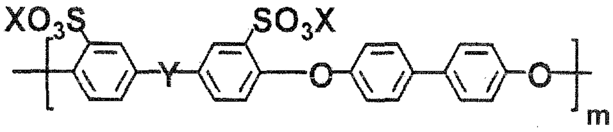

(4)

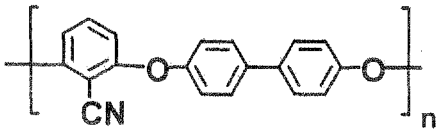

(5)

(wherein m and n represent a copolymerization ratio between general formula (4) and general formula (5), and $m + n = 100$, $25 \leq m \leq 55$,$45 \leq n \leq 75$. X represents H or a monovalent cation species.)

**10.** The ion exchange membrane for vanadium redox batteries according to any one of claims 4 to 6, wherein the ion exchange membrane comprises less than or equal to two layers of ion exchange membranes that are adhered or stacked.

**11.** The ion exchange membrane for vanadium redox batteries according to any one of claims 1 to 10, wherein logarithmic viscosity of each layer in a monolayer or multilayer at 30°C of a 0.5 g/dL solution in a solvent of N-methyl-2-pynolidone is 0.5 to 5.0 dL/g.

**12.** The ion exchange membrane for vanadium redox batteries according to any one of claims 1 to 11, wherein the polymer having a sulfonic acid group is a polyarylene ether compound, and the ion exchange membrane contains 50 to 100% by mass of the polymer.

**13.** A composite body for vanadium redox batteries comprising the ion exchange membrane according to any one of claims 1 to 12 and an electrode.

**14.** A vanadium redox battery comprising the composite body according to claim 13.

FIG.1

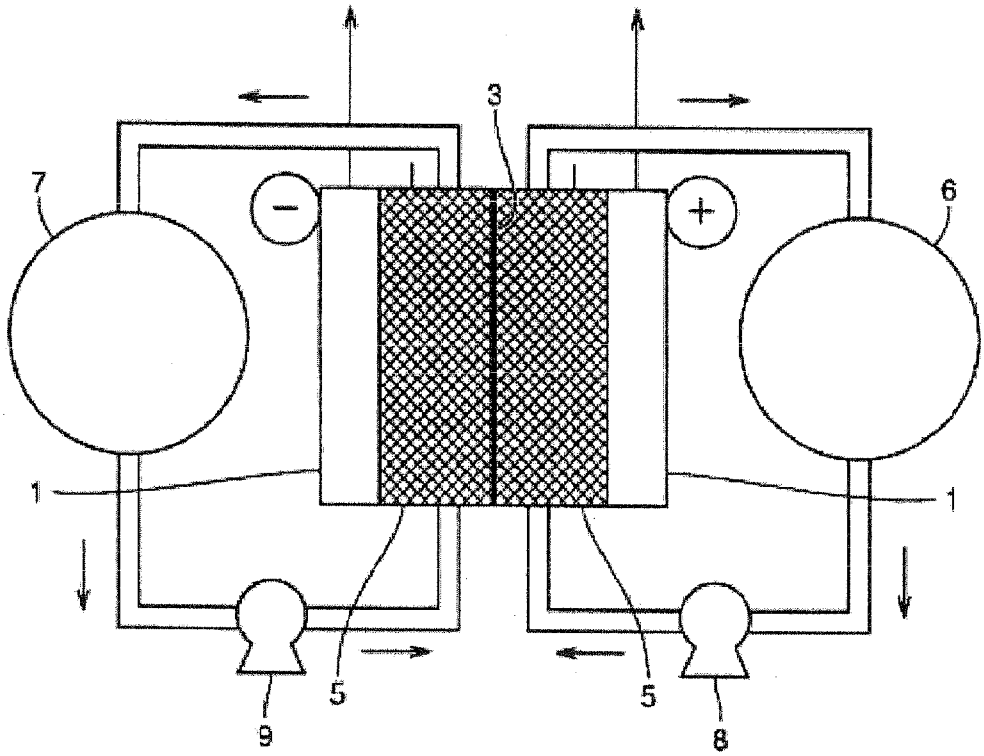

## INTERNATIONAL SEARCH REPORT

International application No.
PCT/JP2012/071171

A. CLASSIFICATION OF SUBJECT MATTER
*H01M8/18*(2006.01)i, *C08G65/40*(2006.01)i, *C08G75/23*(2006.01)i, *C08G81/00*(2006.01)i, *H01M8/02*(2006.01)i

According to International Patent Classification (IPC) or to both national classification and IPC

B. FIELDS SEARCHED

Minimum documentation searched (classification system followed by classification symbols)
H01M8/00-8/24, H01B1/00-1/24, C08G65/40, C08G75/23, C08G81/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-170782 A (Sharp Corp.), 05 August 2010 (05.08.2010), entire text (Family: none) | 1,3,6-14 |
| A | JP 2010-031226 A (JSR Corp.), 12 February 2010 (12.02.2010), entire text (Family: none) | 1,3,6-14 |
| A | JP 2009-200030 A (Toray Industries, Inc.), 03 September 2009 (03.09.2009), entire text & JP 2009-200031 A | 1,3,6-14 |

☒ Further documents are listed in the continuation of Box C.　　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>26 October, 2012 (26.10.12) | Date of mailing of the international search report<br>06 November, 2012 (06.11.12) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2012/071171

C (Continuation). DOCUMENTS CONSIDERED TO BE RELEVANT

| Category* | Citation of document, with indication, where appropriate, of the relevant passages | Relevant to claim No. |
|---|---|---|
| A | JP 6-188005 A (Kashima-Kita Electric Power Corp.), 08 July 1994 (08.07.1994), entire text (Family: none) | 1,3,6-14 |
| A | JP 2003-096219 A (Asahi Glass Co., Ltd.), 03 April 2003 (03.04.2003), entire text (Family: none) | 1,3,6-14 |
| A | JP 2003-155361 A (Asahi Glass Engineering Co., Ltd.), 27 May 2003 (27.05.2003), entire text & US 2003/0105173 A1 & EP 1367086 A1 | 1,3,6-14 |
| A | JP 2-068146 A (Asahi Glass Co., Ltd.), 07 March 1990 (07.03.1990), entire text & US 5180750 A & EP 0352798 A2 | 1,3,6-14 |
| A | JP 9-223513 A (Kashima-Kita Electric Power Corp.), 26 August 1997 (26.08.1997), entire text & US 5759711 A & EP 0790658 A2 | 1,3,6-14 |
| A | JP 6-271688 A (Asahi Glass Co., Ltd.), 27 September 1994 (27.09.1994), entire text (Family: none) | 1,3,6-14 |

Form PCT/ISA/210 (continuation of second sheet) (July 2009)

**INTERNATIONAL SEARCH REPORT**

International application No.
PCT/JP2012/071171

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
1, 3 and 6-14

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**

International application No.
PCT/JP2012/071171

Continuation of Box No.III of continuation of first sheet(2)

Document 1: JP 2010-170782 A (Sharp Corp.), 05 August 2010 (05.08.2010), paragraph [0073]; fig. 1

The technical feature common to the invention of claim 1, the invention of claim 2 and the inventions of claims 4 and 5 is "an ion exchange membrane for vanadium redox batteries, which contains a polymer having a sulfonic acid group".

However, the above-said technical feature cannot be considered to be a special technical feature, since the technical feature does not make a contribution over the prior art in the light of the contents disclosed in the document 1.

Furthermore, there is no other same or corresponding technical feature among these inventions.

Accordingly, the following three inventions (invention groups) are involved in claims.

(Invention 1) the inventions of claims 1, 3 and 6-14

An ion exchange membrane for vanadium redox batteries, which contains a polymer having a sulfonic acid group in addition to the constituent represented by general formula (1).

(Invention 2) the invention of claim 2

An ion exchange membrane for vanadium redox batteries, which contains a polymer having a sulfonic acid group that is a metal salt.

(Invention 3) the inventions of claims 4-5

An ion exchange membrane for vanadium redox batteries, which has a structure composed of two or more layers, and wherein each layer contains a polymer having a sulfonic acid group and two or more layers have different sulfonic acid group contents.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 11502245 A
- JP 2004010631 A


### Non-patent literature cited in the description


- *Journal of Power Sources,* 2011, vol. 195, 4380-4383